# EUROPÄISCHE PATENTSCHRIFT

(11) **EP 1 070 374 B1**
(45) Veröffentlichungstag und Bekanntmachung des Hinweises auf die Patenterteilung: **06.03.2002**
(21) Anmeldenummer: 99909133.3
(22) Anmeldetag: 01.04.1999
(51) Int. Cl.: H02G 1/12

(54) **ABISOLIERVORRICHTUNG UND VERFAHREN ZUM ABISOLIEREN**
STRIPPING DEVICE AND A METHOD FOR STRIPPING
DISPOSITIF ET PROCEDE DE DENUDAGE

(30) Priorität: 06.04.1998 CH 81198; 24.12.1998 CH 12999
(43) Veröffentlichungstag der Anmeldung: 24.01.2001
(73) Patentinhaber: Schleuniger Holding AG, 3608 Thun (CH)
(72) Erfinder: LOCHER, Beat, CH-3608 Thun (CH)
(74) Vertreter: Rosenich, Paul
(86) Internationale Anmeldenummer: IB9900561
(87) Internationale Veröffentlichungsnummer: WO9952188

(56) Entgegenhaltungen:
- DE-C- 3 329 491
- US-A- 4 170 906

## Beschreibung

Die Erfindung betrifft eine Abisoliervorrichtung insbesondere für das Abisolieren von mehradrigen Kabeln gemäss dem Oberbegriff des Anspruches 1 und ein Verfahren zum Abisolieren solcher Kabel gemäss dem Oberbegriff des Anspruches 9.

Mehradrige Kabel im Sinne der Erfindung sind Kabel mit wenigstens 2, vorzugsweise aber wenigstens 3 Drähten mit je wenigstens einer Adernisolation und wenigstens einer zweiten Isolation - dem Kabelmantel - gemeinschaftlich um die isolierten Drähte. Häufig sind die isolierten Drähte - die Kabeladern - innerhalb des Kabelmantels verdrillt.

Die Erfindung beschäftigt sich insbesondere mit dem Abisolieren solcher Kabel mit verdrillten Adern, soll aber auch einsetzbar sein bei nicht verdrillten Kabeladern.

Üblicherweise werden solche Kabel zweistufig abisoliert, indem zuerst mittels speziellen Abmantelmessern - z.B. Radius-V-Messern oder mittels speziellen rotativen Kabelmantelmessern der Kabelmantel entfernt wird und anschliessend - in der Regel an einer zweiten Maschine - mit speziellen Flachmessern oder Formmessern die Adernisolationen um die Drähte entfernt werden.

Dabei werden zuerst die isolierten Drähte von Hand so orientiert, dass sie neben einander zu liegen kommen, um sie dann mit einem flachen Messer oder mit einem flachen Formmesser an beiden Seiten der Adernisolationen einzuschneiden, oder es wird ein Formmesser verwendet, das alle verdrillten Drähte in einem umfasst, deren Adernisolationen zum Teil einschneidet und gleichzeitig alle Isolationen abzieht.

Beim ersten Verfahren bedeutet es einen ziemlichen Arbeitsaufwand und zudem relativ hohe Investitionen, da für einen Abisoliervorgang zwei Abisoliervorrichtungen erforderlich sind. Alternativ hat man auch mit einem zweiten Abisoliergerät die freigelegten Kabeladern einzeln abisoliert, indem man sie von Hand einzeln nach einander in das Abisoliergerät führte, was wiederum eine erhöhte Manipulation mit sich bringt.

Beim zweiten bekannten Verfahren kommt es regelmässig zu unsauberen Abrisslinien an den Schnittstellen der Adernisolation. Das Einschneiden an nur einer Stelle ist haufig auch nicht ausreichend, das betreffende Isolationsstück tatsächlich abzutrennen, so dass es häufig zu Ausschuss kommen kann. Allerdings kann bei dieser Methode - mit einem entsprechenden Formmesser - theoretisch Mantel und Adernisolation gleichzeitig entfernt werden.

In der US-A-4170906 wird eine Abisoliervorrichtung mit axial starren Messern und einem verschieblichen Backen dargestellt, die getrennte Antriebe für Messer und Backen erfordert. Die DE-C-3329491 offenbart eine nicht endloskabelverarbeitungsfähige Abisoliervorrichtung, bei der ein Stempel eine Ausbuchtung einer Ader aus einer Ebene erlaubt.

Der Erfindung liegt nun die Aufgabe zugrunde, eine Vorrichtung und ein Verfahren zu finden, bei dem die Präzision des Abisolierens erhöht wird, ohne einen wesentlich erhöhten apparativen Aufwand. Bisher erforderliche Handarbeit soll entfallen. Gelöst wird diese Aufgabe durch eine Vorrichtung gemäss den Merkmalen des Anspruches 1 und durch ein Verfahren gemäss dem Anspruch 8.

Die erfindungsgemässe Abisoliervorrichtung für mehradrige Kabel, erfüllte die gestellte Aufgabe gut, indem sie eine Relativbewegung des Kabels zwischen einer Spannvorrichtung und wenigstens zwei gegeneinander wirkenden nichtrotierbaren Messern und/oder wenigstens zwei gegeneinander wirkenden, nichtrotierbaren Backen zulässt, wobei die Messer und/oder die Backen entlang der Kabeladern relativ zu der Spannvorrichtung und in Richtung zu den Kabeladern relativ zueinander verfahrbar sind und in der Art einer streifenden Bewegung die Kabeladern aus ihrer verdrillten oder nicht parallelen Lage in eine parallele Lage in einer Ebene bringen, die parallel zu den Schneidkanten der Messer liegt.

Unter Spannvorrichtung im Sinne der Erfindung sind alle herkömmlichen Vorrichtungen zu verstehen, zwischen denen ein Kabel zum Zwecke der Bearbeitung mittels Messern lagefixiert gehalten werden kann. Dazu gehören insbesondere Spannbacken, Transportrollen und Transportbänder oder Kombinationen daraus.

Bei Ausführungen mit Spannbacken sind in der Regel entweder diese oder die Backen oder die Messer oder alle axial verschieblich.

Bei Ausführungen mit Transportrollen oder Transportbändern können im Prinzip sowohl Backen als auch Messer stationär bleiben und es wird in der Regel lediglich das Kabel durch Rotation der Rollen bzw. Bänder verschoben.

Selbstverständlich funktioniert dieser Aufbau und dieses Verfahren auch bei Kabeln mit nichtverdrillten Kabeladern, bei denen jedoch während des Abisolierens nicht vorhergesagt werden kann, wie die Kabeladern innerhalb des Kabelmantels orientiert sind.

Eine erfindungsgemässe Vorrichtung ist sinnvollerweise integriert in einer Abisoliervorrichtung mit einem entsprechenden Kabelmantelmesser für den Kabelmantel, kann aber auch in einem separaten Gehäuse untergebracht sein, so dass sie bereits abgemantelte Kabeladern abisoliert.

Erfindungsgemäss kann die streifende Bewegung sowohl durch die Messer, als auch durch eigene Backen, als auch durch beide gemeinsam durchgeführt werden. Wesentlich dabei ist, dass es nicht zu einem vorzeitigen Einschneiden durch die Messer kommt.

Im Falle der reinen Messerlösung müssen diese sehr vorsichtig zueinandergefahren werden. Gegebenenfalls können die Messer dabei gegenüber ihrem Messerhalter gefedert sein, so dass die Schneidekraft erst nach dem Überwinden der Federkraft aufgebracht wird. Davor wirkt lediglich die Kraft, die ausreicht, die Adern in eine Ebene zu schieben bzw. zu drängen.

Bevorzugt ist jedoch die Lösung mit separaten Backen, die quer zu den Kabeladern angeordnet und vorzugsweise federbeaufschlagt sind.

In einem Ausführungsbeispiel sind diese Backen gegenüber den Messern abgestützt bzw. werden von diesen getragen. Dies geschieht am einfachsten durch eine Führungsschiene, die je einen Backen radial in Bezug auf die Kabelachse führt, wobei jeder Backen gegenüber seinem Messer federnd abgestützt ist und wobei die den Kabeladern zugewandte Backenfläche im Ruhezustand näher den Kabeladern liegt als die Schneidkante des Messers. Dieses Überragen der Backen verhindert ein vorzeitiges Einschneiden der Messer zuverlässig.

Als Messer kommen verschiedenste, bekannte Messerformen zum Einsatz. Am einfachsten ist ein Flachmesser, bessere Qualität erzielt man jedoch mit einem Formmesser, das der Dicke der Adernisolation entsprechend geformte, nebeneinander liegende, halbkreisförmige Teilschneiden aufweist, deren Zahl wenigstens der Zahl der Kabeladern entspricht, die bei diesem Vorgang abisoliert werden sollen. Unter Schneide des Messers - im Sinne der Erläuterungen in dieser Patentanmeldung - ist auch eine gedachte Verbindungslinie zwischen solchen halbkreisförmigen Teilschneiden gemeint.

Die Messer, die für das Abisolieren des Kabelmantels zuständig sind, können einzelne oder paarweise, sowohl starre V-Messer, Radius-Messer, Formmesser, als auch rotierende Messer sein. Sie werden - wie an sich bekannt - in Abhängigkeit von dem Aufbau des Kabelmantels gewählt. Auf den detaillierten Aufbau einer solchen Vorrichtung wird in dieser Anmeldung nicht eingegangen, da dem Fachmann eine Vielzahl von Kabelmantelabisoliervorrichtungen bekannt ist. So brachte z.B. die Anmelderin einen Typ JS 8300 auf den Markt, der mit einem rotierenden Abisoliermesser arbeitet. Die vorliegende Erfindung könnte beispielsweise in einem solchen Typ integriert werden.

Ebenso ist eine Integration in einen Typ CS 9500 der Anmelderin (eine Endloskabelverarbeitungsmaschine mit Antriebsrollen oder Antriebsbändern vor und nach den Bearbeitungswerkzeugen) vorteilhaft.

Unter Relativerschiebung der Messer oder Backen zu den der Spannvorrichtung entlang der Kabeladern ist erfindungsgemäss durchaus auch ein Vorgang umfasst, bei dem die Messer und Backen in bezug auf die Kabeladern axialstarr sind und die Spannvorrichtung mit bzw. für die Kabeladern eine axiale relative Verschiebebewegung durchführen, bevor die Messer einschneiden. Bevorzugt ist in jedem Fall, dass wenigstens eine Messerschneide, an der Seite des Kabels angeordnet ist, die dem benachbarten Kabelende näher liegt und wenigstens ein Backen an der dem Kabelursprung zugewandten Seite. Dadurch wirkt der streifende Vorgang nachhaltiger auf die Lage der Kabeladern vor dem Einschneiden. Selbstverständlich umfasst die Erfindung auch den Vorgang, bei dem das Kabel selbst relativ zu den Backen oder Messern verschoben wird - insbesondere durch rotativen Antrieb von Transportrollen oder -bändern, die auch Spannfunktionen übernehmen.

Zur besseren Verständlichkeit wird in den Ansprüchen Bezug auf das Kabel bzw. die Kabeladern genommen. Die Erfindung ist jedoch nicht auf das Vorhandensein eines Kabels eingeschränkt.

Weitere Details und erfinderische Massnahmen können den Patentansprüchen entnommen werden.

Gegenüber einem bekannten Aufbau mit rotierenden Messern und Zentrierbacken, die gegenüber den Messern federnd abgestützt sind, unterscheidet sich die Erfindung in erster Linie dadurch, dass die Messer für die Kabeladern nichtrotierend sind und dass erfindungsgemäss eine streifende Bewegung vorgesehen ist, die bei solchen bekannten Vorrichtungen, die dem Abisolieren von Koaxialkabeln dienen, weder vorgesehen ist, noch Sinn machen würde.

Anhand einer Zeichnung wird die Erfindung beispielhaft näher erläutert.

Die Figuren werden zusammenhängend und übergreifend beschrieben. Gleiche Bezugszeichen bedeuten gleiche Bauteile, Bezugszeichen mit unterschiedlichen Indizes bedeuten funktionsähnliche Bauteile. Es zeigen dabei:
- Fig.1: Ein mehradriges Kabel mit verdrillten Kabeladern - ein typisches Netzkabel - während des Abziehens des Kabelmantels;
- Fig.2: Ein beispielhaftes Kabelabmantelmesser - in diesem Fall ein Radius bzw. Radius-V-Messer - in Ansicht;
- Fig.3: Den nächsten Schritt beim erfindungegemässen Abisolieren: ein Backen - als gefedertes Gleitstück ausgebildet - fährt auf die verdrillten Kabeladern des Kabels;
- Fig.4: Den nächsten Schritt, bei dem durch eine streifende Bewegung der Gleitstücke die Kabeladern separiert und orientiert werden;
- Fig.5: Die Draufsicht auf den Aufbau gemäss Fig.4;
- Fig.6: Die Backen bzw. Gleitstücke in Ansicht;
- Fig.7: Den nächsten Schritt des Einschneidens der Messer in die erste Isolierung über den Kabeladern;
- Fig.8: Das Abziehen der ersten Isolierung der Kabeladern;
- Fig.9: Die Draufsicht auf den Aufbau gemäss Fig.8;
- Fig. 10: Das Formmesser zum Abisolieren der Kabeladern in Ansicht;
- Fig.11: Die Ansicht und den Schnitt durch zwei kooperierende Messer mit integrierten gefederten Backen bzw. Gleitstücken;
- Fig.12: Den Schnitt durch eine Variante zum Aufbau nach Fig.11 mit beiden Backen auf einer Seite der Messer.

Die folgenden Bezugszeichen haben dabei die folgende Bedeutung:
- 1: Kabelachse
- 2: Kabel, insbesondere Netzkabel
- 3a: Kabel mit verdrillten Kabeladern
- 3b: Kabel mit erfindungsgemäss separierten und orientierten Kabeladern
- 4: Messer zum Abmanteln - Kabelmantelmesser
- 5: Mantelstück
- 6: Backen bzw. gefedertes Gleitstück
- 7: Messer zum Abisolieren der Kabeladern
- 8: Kabelader
- 9: Isolationsstücke
- 10: Messerschneide
- 11: Feder

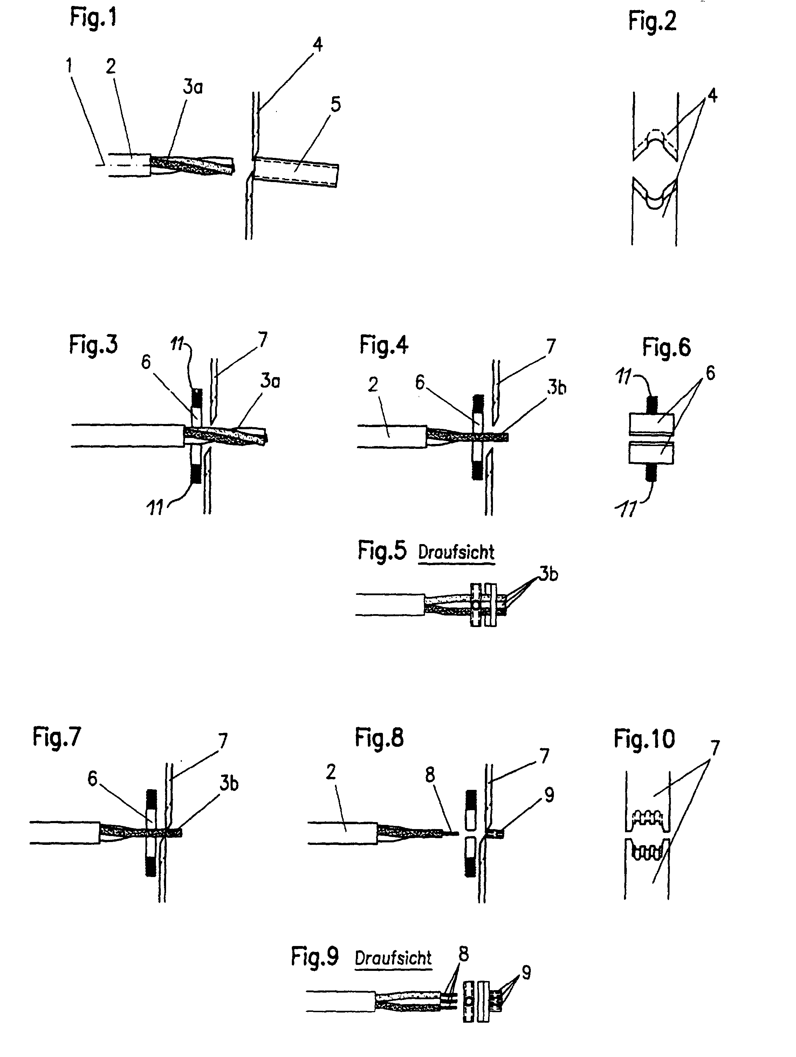

Fig.1 zeigt eine typische Situation beim Abmanteln eines Netzkabels 2, bei dem symmetrisch zur Kabelachse 1 zwei gegenüberliegende Kabelmantelmesser 4 den Mantel einschneiden und ein Mantelstück 5 abisolieren. Bei einem Stand der Technik waren dabei die Konturen des Formmessers 4 so eng gewählt, dass gleichzeitig mit dem Mantel auch Teile der Isolation der Kabeladern 3a entfernt wurden - allerdings ohne grosse Präzision, wie oben ausgeführt. Erfindungsgemäss beschränkt man sich nun auf ein präzises Abisolieren des Mantelstückes 5 alleine. Alternativ könnten hier auch rotierende Messer zum Einsatz gelangen.

Die Fig.3-5 zeigen den erfindungsgemässen Schritt des Separierens bzw. parallelen Orientierens der Kabeladern 3a zu parallel liegenden Kabeladern 3b. Es ist dabei nicht wesentlich, ob die Kabeladern schlussendlich horizontal oder in irgend einer anderen Axialebene um die Kabelachse 1 liegen. Entscheidend ist, dass diese Ebene in Bezug zu der Messerschneide der Messer 7 steht; insbesondere, dass sie parallel zur Messerschneide liegt. Das Separieren und Orientieren erfolgt durch eine streifende Bewegung von als Gleitstücken 6 ausgeführten gegeneinander wirkenden Backen.

Diese Bewegung umfasst eine Relativbewegung zwischen den Backen und dem Kabel zum Kabelende hin und eine Bewegung der Backen zu den Kabeladern hin. Letztere wird insbesondere durch die Kraft von je einer Feder 11 bewirkt, die einerseits die Gleitstücke 6 beaufschlagt und andererseits an einem nicht dargestellten Federhalter abgestützt ist. Der erfindungsgemässe Federhalter ist vergleichbar einem herkömmlichen Messerhalter. Alternativ und bevorzugt sind die Gleitstücke 6 in einer Schiene des Messers 7 geführt und die Feder 11 ist gegenüber dem Messer 7 abgestützt.

Fig.7-9 zeigen den - an sich bekannten - Vorgang des Einschneidens und Abziehens der Isolationstücke 9 von den Kabeladern 8 zum Freilegen des Leiters.

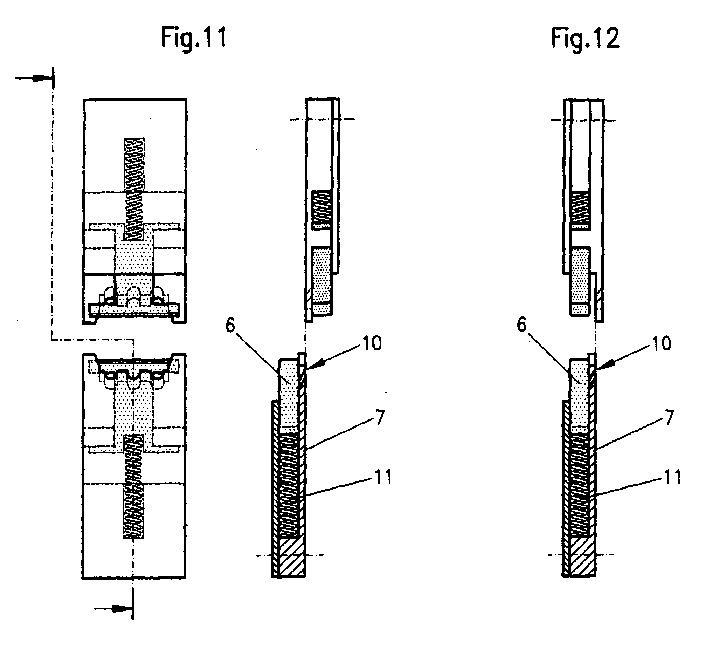

Aus Fig.11 rechts unten erkennt man den Überstand des Gleitstückes 6 über die Messerschneide 10 im Ruhezustand, d.h. bevor die Kabeladern berührt werden. Man erkennt auch, dass das Gleitstück 6 mit seinem Fuss bewegungsbegrenzt ist an Anschlägen im Inneren der Schienenführung des Messers 7. Ebenso erkennt man die Feder 11, die das Gleitstück federbeaufschlagt und die ebenso in der Schienenführung des Messers abgestützt ist.

Bedingt durch die Geometrie der Messer, die einander scherend berühren sollen, liegen bei dieser Ausbildungsform die Gleitstücke einander nicht exakt gegenüber. Bei anderen Ausführungsformen, z.B. bei denen die Backen und die Messer getrennt sind, oder z.B. gemäss Fig.12 werden sie bevorzugt einander gegenüber liegen.

## Patentansprüche

1. Abisoliervorrichtung für mehradrige axial erstreckte Kabel (2), mit einer Spannvorrichtung, wenigstens zwei gegeneinander wirkenden nichtrotierbaren Messern (7) und wenigstens zwei gegeneinander wirkenden Backen (6) in einem Axialabstand zu den Messern (7), **dadurch gekennzeichnet, dass** die Backen (6) in Richtung zu den Kabeladern (8) relativ zueinander und damit gegen das Kabel (2) verfahrbar sind, dass der Axialabstand starr ist, und dass im Betriebszustand eine axiale Relativbewegung des Kabels (2) zwischen der Spannvorrichtung und den Backen (6) bzw. Messern (7) gestattet, bei der die Backen (6) in der Art einer streifenden Bewegung die Kabeladern (8) entlang der Kabelachse aus einer verdrillten oder nichtparallelen Lage in eine Ebene bringen.

2. Abisoliervorrichtung nach Anspruch 1, **dadurch gekennzeichnet, dass** die Backen (6) in Richtung der Kabeladern (8) federbeaufschlagt sind.

3. Abisoliervorrichtung nach Anspruch 1 oder 2, **dadurch gekennzeichnet, dass** die Backen (6) gegenüber den Messern (7) bzw, gegenüber die Messer aufnehmenden Messerhaltern abgestützt sind und/oder von den Messern (7) oder deren Messerhaltern getragen werden.

4. Messerpaar (7) für eine Abisoliervorrichtung nach einem der vorhergehenden Ansprüche, **dadurch gekennzeichnet, dass** jedes Messer (7) eine Führungsschiene aufweist, die je einen Backen (6) in Richtung auf die Kabeladern (8) führt, so dass die Backen (6) gegeneinander und auf ein Kabel (2) zu verschiebbar sind und im Betriebszustand eine axiale Relativbewegung zwischen Kabel (2) und Backen (6) bzw. Messer (7) gestatten, bei der die Backen in der Art einer streifenden Bewegung die Kabeladern (8) entlang der Kabelachse aus einer verdrillten oder nichtparallelen Lage in eine Ebene bringen.

5. Messer nach Anspruch 4, **dadurch gekennzeichnet, dass** der Backen (6) gegenüber dem Messer (7) federnd abgestützt ist.

6. Abisoliervorrichtung oder Messer nach einem der vorhergehenden Ansprüche, **dadurch gekennzeichnet, dass** die den Kabeladern (8) zugewandte Backenfläche im Ruhezustand näher den Kabeladern (8) liegt als die Schneidkante (10) des Messers (7).

7. Messer (7) nach Anspruch 4 oder 5 oder Messer für eine Abisoliervorrichtung nach einem der Ansprüche 1 bis 3, **dadurch gekennzeichnet, dass** es als Formmesser ausgebildet ist, das der Dicke der Adernisolation (9) entsprechend geformte, nebeneinander liegende, halbkreisförmige Teilschneiden aufweist, deren Zahl wenigstens der Zahl der abzuisolierenden Kabeladern (8) entspricht.

8. Verfahren zum Abisolieren eines mehradrigen Kabels (2) mit wenigstens zwei Kabeladern (8) mit wenigstens je einer Adernisolation (9) und einem Kabelmantel (5), bei dem das Kabel (2) von einer Spannvorrichtung gehalten wird und bei dem nach dem Entfernen des Kabelmantels (5) die Adernisolation (9) mittels nichtrotierenden Messern (7) eingeschnitten und abgezogen wird, wobei vor dem Einschneiden der Messer (7) die Kabeladern (8) mechanisch durch eine streifende Bewegung zwischen dem Kabel und einem streiffähigen Bauteil (6) parallel zueinander orientiert werden, so dass sie in einer Ebene zu liegen kommen, die parallel zu der Schneidkante (1) der Messer (7) liegt, **dadurch gekennzeichnet, dass** der axiale Abstand zwischen dem streiffähigen Bauteil (6) und den Messern (7) konstant ist bzw. konstant gehalten wird.

9. Verfahren nach Anspruch 8, **dadurch gekennzeichnet, dass** die streifende Bewegung durch eine Relativverschiebung der Messer (7) und/oder von Backen (6) in bezug auf die Spannvorrichtung entlang der Kabeladern (8), bei gleichzeitigem langsamen und schrittweisen schliessen der Messer (7) und/oder Backen (6) gegen die Kabeladern (8) - vorzugsweise unter Vermeidung des vorzeitigen Einschneidens - erzeugt wird.

10. Verfahren nach Anspruch 8 oder 9, **dadurch gekennzeichnet, dass** für das Aufbringen der streifenden Bewegung eigene gegeneinander und in Richtung zu den Kabeladern (8) wirkende Backen (6) vorgesehen werden, die unabhängig von oder gemeinsam mit den Messern (7) eine Relativverschiebung zu der Spannvorrichtung entlang der Kabeladern (8) unter gleichzeitiger Relativverschiebung zueinander durchführen.

11. Verfahren nach Anspruch 10, **dadurch gekennzeichnet, dass** die Backen (6) in Schliessrichtung federbelastet sind.

12. Verfahren nach Anspruch 11, **dadurch gekennzeichnet, dass** je ein Backen (6) von je einem Messer (7) getragen wird und gegenüber diesem federnd abgestützt ist, wobei die den Kabeladern (8) zugewandte Backenfläche im Ruhezustand den Kabeladern (8) näher liegt als die Schneidkante (10) des jeweils zugeordneten Messers (7).

13. Verfahren nach einem der Ansprüche 8 bis 11, **dadurch gekennzeichnet, dass** die Backen (6) in einer eigenen Führung am jeweils selben Werkzeughalter federnd gehalten werden, der auch das jeweils zugeordnete Messer bzw. den zugeordneten Messerhalter trägt, wobei die Federkraft vorzugsweise so gewählt ist, dass beim streifenden Vorgang die Adernisolationen nicht wesentlich verformt werden.

## Claims

1. A stripping device for multi-wire cables (2), comprising a clamping device, at least two nonrotatable blades (7) acting against one another and at least two jaws (6) acting against one another at an axial distance to the blades (7), wherein the jaws (6) are displaceable in the directions of the cable wires (8), relative to one another and therefore in the direction toward the cable (2), that the axial distance is fixed, and that in operating condition an axial relative movement of the cable (2) between the clamping device and the jaws (6) resp. blades (7) is allowed, whereby the jaws (6) in the manner of a stripping movement brings the cable wires (8) along the cable axis from a twisted or not parallel situation into one plane.

2. The stripping device as claimed in claim 1, wherein the jaws (6) are spring-loaded in the direction of the cable wires (8).

3. The stripping device as claimed in claim 1 or 2, wherein the jaws (6) are supported against the blades (7) or against the blade-receiving blade holders and/or are carried by the blades (7) or their blade holders.

4. A blade couple (7) for a stripping device as claimed in any of the preceding claims, wherein each blade (7) has a guide rail which guides a jaw (6) in the direction toward the cable wires (8), so that the jaws (6) are displaceable against each other and toward a cable (2) and allow in working condition a relative movement axially between the cable (2) and the jaws (6) resp. blades (7), whereby the jaws bring the cable wires (8) along the cable axe from a twisted or not parallel situation into one plane in the manner of a stripping movement.

5. The blade as claimed in claim 4, wherein the jaw (6) is supported in a spring-loaded manner relative to the blade (7).

6. The stripping device or blade as claimed in any of the preceding claims, wherein the jaw surface facing the cable wires (8) is, in the rest state, closer to the cable wires (8) than the cutting edge (10) of the blade (7).

7. The blade (7) as claimed in claim 4 or 5 or blade for a stripping device as claimed in any of claims 1 to 3, wherein it is in the form of a shaped blade which has semicircular partial cutting edges which are shaped according to the thickness of the wire insulation (9) and are located side by side and whose number corresponds at least to the number of cable wires (8) to be stripped.

8. A method for stripping a multi-wire cable (2) comprising at least two cable wires (8) having at least one wire insulation (9) each and a cable sheath (5), in which the cable (2) is held by a clamping device and in which, after removal of the cable sheath (5), the wire insulation (9) is severed and stripped by means of nonrotating blades (7), wherein, before the incision by the blades (7), the cable wires (8) are oriented parallel to one another mechanically by a stripping movement between the cable and a component (6) capable of stripping, so that they come to lie in a plane which is parallel to the cutting edge (1) of the blades (7), whereby the axial distance between the component (6) capable of stripping and the blades (7) is constant resp. is kept constant.

9. The method as claimed in claim 8, wherein the grazing movement is produced by a displacement of the blades (7) and/or of jaws (6) relative to the clamping device along the cable wires (8), with simultaneous slow and stepwise closing of the blades (7) and/or jaws (6) against the cable wires (8) - preferably while avoiding premature incision.

10. The method as claimed in claim 8 or 9, wherein separate jaws (6) acting against one another and in the direction toward the cable wires (8) and, independently of or together with the blades (7), execute a displacement relative to the clamping device along the cable wires (8) with simultaneous displacement relative to one another are provided for applying the grazing movement.

11. The method as claimed in claim 10, wherein the jaws (11) are spring-loaded in the closing direction.

12. The method as claimed in claim 11, wherein one jaw (6) each is carried by one blade (7) each and is supported in a spring-loaded manner relative to it, the jaw surface facing the cable wires (8) being, in the rest state, closer to the cable wires (8) than the cutting edge (10) of the respectively assigned blade (7).

13. The method as claimed in any of claims 8 to 11, wherein the jaws (6) are held in a spring-loaded manner in a separate guide on the same tool holder in each case, which also carries the respectively assigned blade or the assigned blade holder, the spring force preferably being chosen so that, during the grazing operation, the wire insulations are not substantially deformed.

## Revendications

1. Dispositif de dénudage des câbles multiconducteurs (2), qui s'étendent axialement, comprenant un dispositif de serrage, au moins deux couteaux (7) non-rotatifs, agissants l'un contre l'autre et au moins deux mâchoires (6) agissantes l'une contre l'autre et situées dans une distance axiale des couteaux (7), **caractérisé en ce, que** les mâchoires (6) peuvent être déplacée en direction vers les conducteurs de câble (8) relativement l'une à l'autre, et ainsi vers le câble (2), que la distance axiale est fixe, et qu'en condition d'opération un mouvement relative axiale du câble (2) entre le dispositif de serrage et les mâchoires (6) d'une manière d'un mouvement effleurant amène les conducteurs du câble de ses positions torsadés ou non-parallèles dans un seul plan.

2. Dispositif de dénudage selon la revendication 1, **caractérisé en ce, que** les mâchoires (6) sont chargées par ressort en direction vers les conducteurs de câble (8).

3. Dispositif de dénudage selon la revendication 1 ou 2, **caractérisé en ce, que** les mâchoires (6) sont appuyées relativement aux couteaux (7) ou relativement aux portes-lames, qui reçoivent les couteaux, et/ou sont supportées par les couteaux (7) ou des portes-lames de lesquels.

4. Pair des couteaux (7) pour un dispositif de dénudage selon une des revendications précédentes, **caractérisé en ce, que** chaque couteau (7) comprend une glissière de guidage, qui guide chacune une mâchoire (6) en direction vers les conducteurs de câble (8), de manière que les mâchoires (6) sont déplaçable l'une contre l'autre et vers un câble (2) en permettant en condition d'opération un mouvement relatif axial entre le câble (2) et les mâchoires (6) ou les couteaux (7), pendant lequel les mâchoires amènent les conducteurs de câble d'une manière d'un mouvement effleurant le long de l'axe de câble de ses positions torsadés ou non-parallèles dans un seul plan.

5. Couteau selon la revendication 4, **caractérisé en ce, que** la mâchoire (6) est supportée élastiquement par rapport au couteau (7).

6. Dispositif de dénudage ou couteau selon une des revendications précédentes, **caractérisé en ce, que** la surface de mâchoire tournée aux conducteurs de câble (8), en position de repos, est plus proche aux conducteurs de câble (8) que l'arête coupante (10) du couteau (7).

7. Couteau (7) selon la revendication 4 ou 5 ou couteau pour un dispositif de dénudage selon une des revendications 1 à 3, **caractérisé en ce, qu'**il est formé comme poinçon de forme, qui comprend des arêtes partiels semi-circulaires formés en correspondance avec l'épaisse de l'isolation des conducteurs (9) et situés l'un près de l'autre, le nombre desquels correspondant au moins au nombre des conducteurs de câble 8 à dénuder.

8. Procédé pour dénuder d'un câble multiconducteur (2) ayant au moins deux conducteurs de câble (8), chacun ayant au moins une isolation de conducteur (9) et une gaine de câble (5), dans lequel le câble (2) est arrêté d'un dispositif de serrage, et dans lequel l'isolation de conducteur (9) est incise et enlevées par des couteaux (7) non-rotatifs après l'enlèvement de la gaine de câble (5), les conducteurs de câble (8) étant orientés en parallèle l'un à l'autre avant l'incision par les couteaux (7) d'une manière mécanique par un mouvement effleurant entre le câble et une composante capable à effleurer (6), de manière qu'ils sont amenés dans un seul plan parallèle à l'arête (1) des couteaux (7), **caractérisé en ce, que** la distance axiale entre la composante capable à effleurer (6) et les couteaux (7) est constante ou est maintenue constante.

9. Procédé selon la revendication 8, **caractérisé en ce, que** le mouvement effleurant est produit par un déplacement relative des couteaux (7) et/ou des mâchoires (6) par rapport au dispositif de serrage le long des conducteurs de câble (8), en serrant simultanément lentement et pas à pas les couteaux (7) et/ou les mâchoires (6) vers les conducteurs de câble (8), préférablement en évitant une incision prématurée.

10. Procédé selon la revendication 8 ou 9, **caractérisé en ce, que** l'on prévoit des mâchoires (6) spécifiques pour la réalisation du mouvement effleurant, qui agissent l'une contre l'autre et en direction vers les conducteurs de câble (8), et qui réalisent un mouvement relative au dispositif de serrage le long des conducteurs de câble (8), soit il indépendamment, soit il en commun avec les couteaux (7), en se déplaçant simultanément l'une relativement à l'autre.

11. Procédé selon la revendication 10, **caractérisé en ce, que** les mâchoires (6) sont chargées par ressort en direction de serrage.

12. Procédé selon la revendication 11, **caractérisé en ce, que** les mâchoires (6) sont chacune supportée par un couteau (7) et sont chacune appuyée élastiquement par rapport à celui-ci, la surface de mâchoire tournée aux conducteurs de câble (8), en position de repos, étant plus proche aux conducteurs de câble (8) que l'arête coupante (10) du couteau (7) respectivement adjoint.

13. Procédé selon une des revendications 8 à 11, **caractérisé en ce, que** chaque mâchoire (6) est tenue élastiquement dans un guidage propre au même porte-outil, qui porte aussi le couteau respectivement adjoint ou le porte-lames adjoint, la force de ressort étant préférablement choisi d'une manière, que les isolations des conducteurs ne sont pas déformées substantiellement pendant l'opération effleurante.
